**Europäisches Patentamt**

**European Patent Office**

**Office européen des brevets**

(11) Veröffentlichungsnummer: **0 033 308**
**B1**

(12) **EUROPÄISCHE PATENTSCHRIFT**

(45) Veröffentlichungstag der Patentschrift:
18.05.83

(21) Anmeldenummer: **81890003.7**

(22) Anmeldetag: **09.01.81**

(51) Int. Cl.³: **B 22 D 11/16**, B 22 D 37/00,
G 01 F 23/06

(54) Verfahren zum Verhindern des Eindringens von Schlacke in eine Stranggiesskokille beim Stranggiessen sowie Einrichtung zur Durchführung des Verfahrens.

(30) Priorität: **25.01.80 AT 412/80**

(43) Veröffentlichungstag der Anmeldung:
**05.08.81 Patentblatt 81/31**

(45) Bekanntmachung des Hinweises auf die Patenterteilung:
**18.05.83 Patentblatt 83/20**

(84) Benannte Vertragsstaaten:
**BE CH DE FR GB IT LI LU NL SE**

(56) Entgegenhaltungen:
**BE-A- 877 325**
**DE-A-2 745 799**
**DE-A-2 928 054**
**DE-B-2 637 421**
**FR-A-1 389 442**
**FR-A-2 292 539**
**FR-A-2 362 376**
**FR-A-2 365 788**
**US-A-3 783 932**

(73) Patentinhaber: **VOEST-ALPINE Aktiengesellschaft,
Werksgelände, A-4010 Linz (AT)**

(72) Erfinder: **Wiesinger, Horst, Dipl.-Ing.,
Eckermannstrasse 12, A-4020 Linz (AT)**
Erfinder: **Gränitz, Fritz, Dipl.-Ing., Voltastrasse 5,
A-4045 Linz (AT)**
Erfinder: **Hargassner, Reinhard, Neubauzelle 80,
A-4020 Linz (AT)**
Erfinder: **Bramberger, Hubert, Glimpfingerstrasse 63,
A-4020 Linz (AT)**

(74) Vertreter: **Wolfram, Gustav, Dipl.-Ing.,
Schwindgasse 7 P.O. Box 205, A-1041 Wien (AT)**

ACTORUM AG

## Verfahren zum Verhindern des Eindringens von Schlacke in eine Stranggiesskokille beim Stranggiessen sowie Einrichtung zur Durchführung des Verfahrens

Die Erfindung betrifft ein Verfahren zum Verhindern des Eindringens von Schlacke in eine Stranggiesskokille beim Stranggiessen einer Metallschmelze, wobei die Metallschmelze aus einem oberflächig mit einer Schlackenschicht bedeckten Vorratsbehälter in ein oberflächig mit einer Schlackenschicht bedecktes Zwischengefäss und aus diesem in eine Kokille fliesst und im Zwischengefäss fortlaufend die Höhe des Metallschmelzenbadspiegels ermittelt wird.

Beim Stranggiessen ist sowohl in der Giesspfanne als auch im Zwischengefäss das Metallschmelzenbad zum Schutz vor Wärmeverlust und Oxidation von einer Schlackenschicht bedeckt. Für die Stranggiessanlage und das Bedienungspersonal der Anlage stellt es eine grosse Gefahr dar, wenn Schlacke aus dem Zwischengefäss in die Kokille fliesst. Da Schlacke nach dem Erstarren porös ist und nur einen schlechten Wärmeleiter darstellt, bildet in die Kokille gelangende Schlacke – die nicht nur eine Verunreinigung des Stranges darstellt – sobald sie an der Strangoberfläche zu liegen kommt, eine nur dünne, poröse Strangschale. Diese dünne Schlackenschale ist dem ferrostatischen Druck des Stranges in der Regel nicht gewachsen, so dass es zu einem Strangdurchbruch kommen kann. Weiters gelangt das bei der Sekundärkühlzone verwendete Kühlwasser in die Strangschale und kann infolge von Knallgasbildung Explosionen hervorrufen.

Es sind bereits verschiedene Methoden bekannt, die das Ausströmen von Schlacke aus einem metallurgischen Gefäss anzeigen. So ist z. B. in der AT-B-350 090 ein Verfahren beschrieben, bei dem der aus einem metallurgischen Gefäss austretende Schmelzenstrahl von einem Verhältnispyrometer beobachtet wird, um zu Beginn des Schlackenauslaufes aus dem metallurgischen Gefäss ein Signal zu erhalten. Diese Methode ist jedoch für das Stranggiessen nicht geeignet, da beim Stranggiessen der in die Kokille fliessende Giessstrahl in der Regel von einem Schatten- bzw. Giessrohr umgeben ist und somit nicht beobachtet werden kann. Ausserdem hat diese Methode den Nachteil, dass Schlacke erst dann erkannt wird, wenn sie bereits aus dem metallurgischen Gefäss ausgetreten ist, so dass auch dann, wenn sofort nach Erkennen eines Schlackenaustrittes die Austrittsöffnung des metallurgischen Gefässes verschlossen wird, eine – wenn auch nur verhältnismässig geringe – Schlackenmenge in die Kokille strömt.

Es ist bekannt, eine Dichtemessung der in die Kokille eingeströmten Schmelze mit Hilfe eines radioaktiven Elementes vorzunehmen, jedoch hat diese Methode den Nachteil, dass dabei die Schlacke erst nach ihrem Eintritt in die Kokille erkennbar ist und dass umfangreiche Schutzmassnahmen gegen radioaktive Strahlung erforderlich sind.

Ein Verfahren der eingangs beschriebenen Art ist aus der BE-A-877 325 bekannt. Bei diesem Verfahren wird lediglich der Metallschmelzenbadspiegel kontrolliert, wozu ein Schwimmer dient, dessen Dichte zwischen derjenigen der Metallschmelze und derjenigen der Schlacke liegt, welcher Schwimmer mit einer Einrichtung zum Ermitteln der von ihm eingenommenen Position verbunden ist. Mit dem bekannten Verfahren ist es zwar möglich festzustellen, wie viel Metallschmelze sich in einem Zwischengefäss befindet, es ist jedoch nicht möglich, den Anteil der Schlacke in dem Zwischengefäss festzustellen, wenn der Metallschmelzenbadspiegel das Mindestniveau erreicht. Ohne Kenntnis des Anteiles der Schlacke kann nicht entschieden werden, ob man durch Ergänzen der Metallschmelze weiter giessen kann oder ob das Giessen unterbrochen werden muss, da das Zwischengefäss eine zu hohe Schlackenschicht aufweist.

Die Erfindung bezweckt die Vermeidung dieser Nachteile und Schwierigkeiten und stellt sich die Aufgabe, ein Verfahren der eingangs beschriebenen Art sowie eine Einrichtung zur Durchführung des Verfahrens zu schaffen, welche es gestatten, nicht nur mit Sicherheit einen Schlackeneintritt in die Kokille zu verhindern, sondern welche es weiters gestatten, innerhalb einer kurzen Zeitspanne zu entscheiden, ob bei Erreichen des minimalen Metallschmelzenbadspiegels das Giessen unterbrochen werden muss oder das Giessen unter vermehrtem Metallschmelzeneintritt in das Zwischengefäss aufrecht erhalten werden kann.

Diese Aufgabe wird erfindungsgemäss dadurch gelöst, dass im Zwischengefäss zusätzlich fortlaufend die Höhe des Schlackenbadspiegels ermittelt wird und aus der Relation der ermittelten Werte die im Zwischengefäss befindliche Schlackenmenge bestimmt wird. Sobald die Schlackenmenge im Zwischengefäss ein unzulässig hohes Mass erreicht, d. h. wenn nurmehr eine geringe Menge Metallschmelze im Zwischengefäss vorhanden ist, wird entweder das Giessen abgebrochen oder es wird das Giessen unterbrochen und nach Austausch des eine zu grosse Schlackenmenge aufweisenden Zwischengefässes bzw. Austausch der Giesspfanne das Giessen wieder fortgesetzt. Ist die Schlackenmenge im Zwischengefäss nur gering, wird das Giessen unter vermehrtem Metallschmelzeneintritt aus der Giesspfanne in das Zwischengefäss aufrechterhalten.

Eine bevorzugte Einrichtung zur Durchführung des Verfahrens mit einem über einem Zwischengefäss angeordneten Vorratsbehälter und einer unterhalb des Zwischengefässes angordneten Kokille, wobei ein an einem Tragarm montierter, auf dem Metallschmelzenbadspiegel schwimmender Schwimmkörper vorgesehen ist und der Tragarm mit einer Messeinrichtung zum Messen der von ihm eingenommenen Position verbunden ist, ist dadurch gekennzeichnet, dass ein zweiter, ebenfalls an einem Tragarm montierter, jedoch auf dem Schlackenbadspiegel schwimmender Schwimmkörper vorgesehen ist, der mit einer Messeinrichtung zum Messen der von ihm eingenommenen Position verbunden ist.

Vorteilhaft ist dabei ein Tragarm über seine Schwenkachse hinaus verlängert ausgebildet und trägt die Verlängerung ein vorzugsweise verschiebbares Gegengewicht.

Nach einer anderen vorteilhaften Ausführungsform sind zum Ermitteln der Höhe des Metallschmelzenbadspiegels in einander gegenüberliegenden Seitenwänden des Zwischengefässes Induktionsschleifen, von denen eine als Geber und mindestens eine als Empfänger wirkt, vorgesehen.

Die Anwendung von Induktionsschleifen zur Bestimmung des Füllstandes von flüssigem Metall in einer Giessform beim kontinuierlichen Giessen ist aus der US-A-3 783 932 bekannt, wobei jedoch das Verhältnis Schlackenmenge:Metallschmelzenmenge nicht berücksichtigt wird.

Eine weitere vorteilhafte Ausführungsform ist dadurch gekennzeichnet, dass zum Ermitteln der Höhe des Schlackenbadspiegels eine Infrarotkamera vorgesehen ist. Aus der FR-A-2 292 539 ist es bekannt, das Badniveau in einer Giessform mittels einer Photozelle zu bestimmen, wobei jedoch das Verhältnis Schlackenmenge:Metallschmelzenmenge nicht berücksichtigt wird.

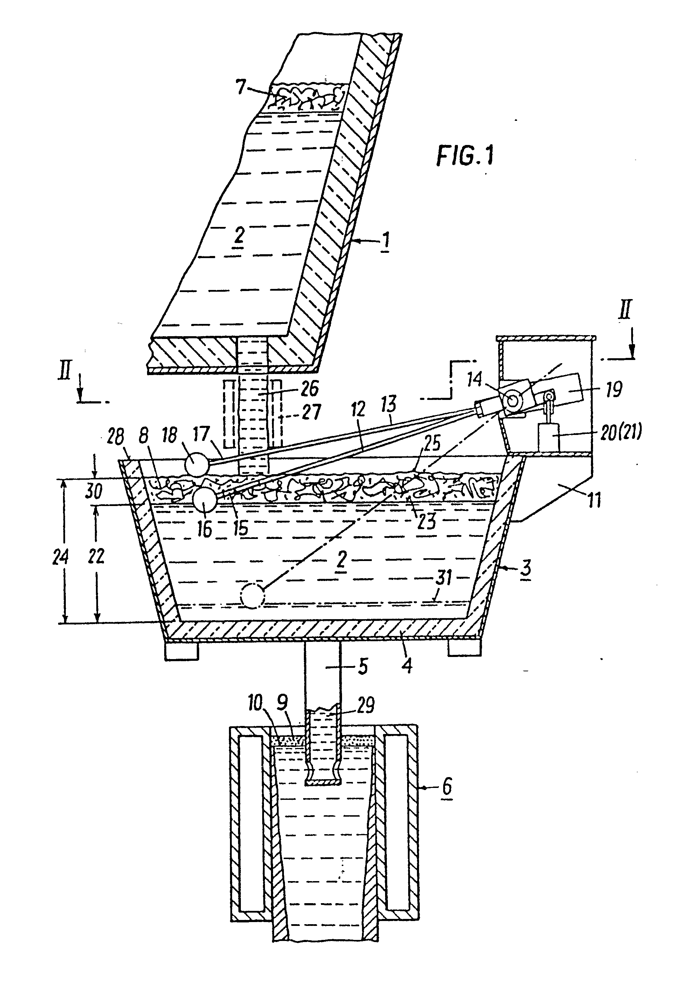

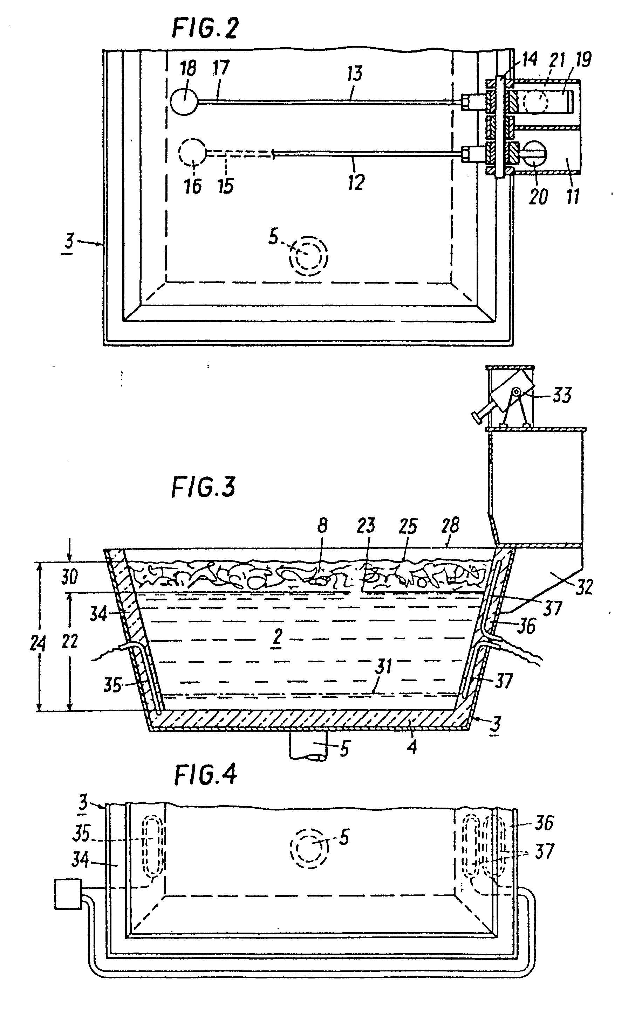

Die Erfindung ist nachfolgend anhand der Zeichnung näher erläutert, wobei Fig. 1 einen Schnitt durch einen Vorratsbehälter, ein Zwischengefäss und eine Kokille einer Stranggiessanlage in schematischer Darstellung veranschaulicht. Fig. 2 stellt den Grundriss des in Fig. 1 dargestellten Zwischengefässes teilweise im Schnitt dar. Fig. 3 zeigt in zu Fig. 1 analoger Darstellung einen Schnitt durch ein Zwischengefäss, Fig. 4 einen Grundriss dieses Zwischengefässes.

Gemäss Fig. 1 fliesst aus einem Vorratsbehälter, der als Giesspfanne 1 ausgebildet ist, Metallschmelze, im vorliegenden Fall Stahlschmelze 2, in ein Zwischengefäss 3 und von dort durch ein im Boden 4 des Zwischengefässes eingesetztes Giessrohr 5 in eine Durchlaufkokille 6. Die aus der Giesspfanne 1 ausfliessende Stahlschmelzenmenge pro Zeiteinheit lässt sich mittels eines nicht dargestellten Schiebers regeln. Sowohl in der Giesspfanne 1 als auch im Zwischengefäss 3 ist die Stahlschmelze 2 oberflächig von einer Schlackenschicht 7 bzw. 8 bedeckt, die die Stahlschmelze 2 vor Wärmeverlust schützt und eine Oxidation der Stahlschmelze verhindert. In der Kokille 6 ist die Stahlschmelze von einem Giesspulver 9 bedeckt.

An einer seitlich am Zwischengefäss montierten Konsole 11 sind zwei als Schwenkarme 12, 13 ausgebildete Tragarme um eine horizontale Achse 14 schwenkbar gelagert, wobei einer 12 der Schwenkarme an seinem vorderen Ende 15 mit einem Schwimmkörper 16 versehen ist, dessen spezifisches Gewicht kleiner als das spezifische Gewicht der Metallschmelze 2 und grösser als das spezifische Gewicht der geschmolzenen Schlacke 8 ist. Der zweite Schwenkarm 13 weist an seinem vorderen Ende 17 ebenfalls einen Schwimmkörper 18 auf, wobei jedoch dessen spezifisches Gewicht kleiner ist als das spezifische Gewicht der geschmolzenen Schlacke 8. Durch ein zweckmässig verstellbares Gegengewicht 19 am hinteren Ende dieses Schwenkarmes 13 kann die Eintauchtiefe des Schwimmkörpers 18 eingestellt werden. Beide Schwenkarme 12, 13 sind mit ihren hinteren Enden mit Messeinrichtungen 20, 21 zum Messen der von jeder der Schwenkarme jeweils eingenommenen Position gekoppelt. Diese Messeinrichtungen sind vorteilhaft als induktive Geber ausgebildet. Mit Hilfe des ersten Schwenkarmes 12 ist es jederzeit möglich, die Höhe 22 des Metallschmelzenbadspiegels 23 und mit Hilfe des zweiten Schwenkarmes 13 die Höhe 24 des Schlackenbadspiegels 25 zu ermitteln.

Wie in Fig. 1 strichliniert angedeutet, ist beim Stranggiessen oft der von der Giesspfanne 1 in das Zwischengefäss 3 fliessende Schmelzenstrahl 26 durch ein Schattenrohr 27 einer freien Beobachtung entzogen, so dass man nicht ohne weiteres feststellen kann, ob Schlacke in das Zwischengefäss einfliesst. Beim Leergiessen der Pfanne ist es möglich, dass Schlacke mit Stahl vermischt in das Zwischengefäss 3 fliesst, so dass sich im Zwischengefäss 3 unzulässig viel Schlacke ansammelt, d. h. dass der Metallschmelzenbadspiegel 23 schon sehr weit abgesunken ist, obwohl der Schlackenbadspiegel 25 sich nahe beim oberen Rand 28 des Zwischengefässes 3 befindet, so dass nicht erkennbar ist, wieviel Metallschmelze 2 sich im Zwischengefäss befindet. Unzulässig viel Schlacke kann sich aber auch im Zwischengefäss 3 ansammeln, wenn mehrere Giesspfannen 1 hintereinander in ein und dasselbe Zwischengefäss abgegossen werden und mit jedem Mal Abgiessen einer Giesspfanne Schlacke in das Zwischengefäss gelangt. Da der in die Kokille 6 eintretende Giessstrahl 29 durch das Giessrohr 5 einer freien Beobachtung entzogen ist, ist es dann möglich, dass auch bei vollem Zwischengefäss 3 unbemerkt Schlacke in die Kokille 6 fliesst.

Aus der Differenz der gleichzeitig gemessenen Werte für die Höhe 24 des Schlackenbadspiegels und die Höhe des Metallschmelzenbadspiegels 23 lässt sich die Höhe, d. h. die Dicke 30 der Schlackenschicht 8 im Zwischengefäss 3 und damit die Menge der Schlacke ermitteln. Dadurch ist es möglich, das Giessen bei zu geringer Stahlschmelzenmenge im Zwischengefäss 3 entweder zu unterbrechen oder nach Austausch des Zwischengefässes 3 und der Giesspfanne 1 gegen entsprechende Gefässe mit genügend grosser Stahlschmelzenmenge fortzusetzen.

Wesentlich bei der erfindungsgemässen Einrichtung ist, dass die im Zwischengefäss 3 befindliche Schlackenmenge jederzeit genau ermittelbar ist, so dass es möglich ist, obige Massnahmen, nämlich das Unterbrechen des Giessens, bzw. Austauschen der Giesspfanne 1 und des Zwischengefässes 3, bereits dann zu treffen, wenn der Metallschmelzenbadspiegel einen vorgegebenen Mindestwert erreicht. Dieser minimale Metallschmelzenbadspiegel ist mit 31 bezeichnet. Das Eintreten von Schlacke in die Kokille 6 kann dadurch mit Sicherheit verhindert werden. Sollte der minimale Metallschmelzenbadspiegel 31 bei gleichzeitig niedrigem Schlackenbadspiegel erreicht werden, wird der Giessvorgang nicht unterbrochen, sondern unter vermehrtem Metallschmelzeneintritt aus der Giesspfanne 1 in das Zwischengefäss 3 aufrechterhalten.

Bei der in den Fig. 3 und 4 dargestellten Ausführungsform ist an einer seitlich am Zwischengefäss 3 montierten Konsole 32 eine Infrarotkamera 33 oder eine andere optische Messeinrichtung, wie beispielsweise ein Pyrometer, montiert, mit der fortlaufend die Höhe 24 des im Zwischengefäss 3 befindlichen Schlackenbadspiegels 25 ermittelt werden kann. Das Ermitteln der Menge der Stahlschmelze 2 erfolgt gemäss diesem Ausführungsbeispiel induktiv. Zu diesem Zweck sind in einer Seitenwand 36 des Zwischengefässes 3 ein als Induktionsschleife ausgebildeter induktiver Geber 35 sowie an der gegenüberliegenden Seitenwand 36 des Zwischengefässes zwei als Induktionsschleifen ausgebildete induktive Empfänger 37 eingebaut, die ein der jeweiligen Höhe 22 der Metallschmelze 2 entsprechendes Signal geben. Die Ermittlung der Schlackenmenge erfolgt hier ebenfalls durch Differenzbildung der Höhe 24 des Schlackenbadspiegels 25 und der Höhe 22 des Metallschmelzenbadspiegels 23.

Die Erfindung ist nicht auf die in der Zeichnung dargestellte Ausführungsform beschränkt, sondern kann in verschiedener Hinsicht modifiziert werden. So ist es beispielsweise möglich, die Infrarotkamera 33 zur Messung der Höhe 24 des Schlackenbadspiegels 25 mit dem in Fig. 1 dargestellten Schwenkarm 12 zur Messung der Höhe 22 des Metallschmelzenbadspiegels 23 zu kombinieren oder die induktive Messeinrichtung 35, 37 zur Messung der Höhe 22 des Metallschmelzenbadspiegels 23 zusammen mit dem Schwenkarm 13 der Fig. 1, mit dem die Höhe 24 des Schlackenbadspiegels 25 gemessen wird, zu verwenden.

## Patentansprüche

1. Verfahren zum Verhindern des Eindringens von Schlacke (8) in eine Stranggiesskokille (6) beim Stanggiessen einer Metallschmelze (2), wobei die Metallschmelze aus einem oberflächig mit einer Schlackenschicht (7) bedeckten Vorratsbehälter (1) in ein oberflächig mit einer Schlackenschicht (8) bedecktes Zwischengefäss und aus diesem in eine Kokille (6) fliesst und im Zwischengefäss (3) fortlaufend die Höhe (22) des Metallschmelzenbadspiegels (23) ermittelt wird, dadurch gekennzeichnet, dass im Zwischengefäss (3) zusätzlich fortlaufend die Höhe (24) des Schlackenbadspiegels (25) ermittelt wird und aus der Relation der ermittelten Werte die im Zwischengefäss (3) befindliche Schlackenmenge bestimmt wird.

2. Einrichtung zur Durchführung des Verfahrens nach Anspruch 1, mit einem über einem Zwischengefäss (3) angeordneten Vorratsbehälter (1) und einer unterhalb des Zwischengefässes (3) angeordneten Kokille (6), wobei ein an einem Tragarm (12) montierter, auf dem Metallschmelzenbadspiegel (23) schwimmender Schwimmkörper (16) vorgesehen ist und der Tragarm (12) mit einer Messeinrichtung (20) zum Messen der von ihm eingenommenen Position verbunden ist, dadurch gekennzeichnet, dass ein zweiter, ebenfalls an einem Tragarm (13) montierter, jedoch auf dem Schlackenbadspiegel (25) schwimmender Schwimmkörper (18) vorgesehen ist, der mit einer Messeinrichtung (21) zum Messen der von ihm eingenommenen Position verbunden ist (Fig. 1, 2).

3. Einrichtung nach Anspruch 2, dadurch gekennzeichnet, dass einer (13) der beiden Schwenkarme (12, 13) als über seine Schwenkachse (14) hinaus verlängerter Schwenkarm ausgebildet ist und dass die Verlängerung ein vorzugsweise verschiebbares Gegengewicht (19) trägt (Fig. 1, 2).

4. Einrichtung zur Durchführung des Verfahrens nach Anspruch 1, mit einem über einem Zwischengefäss (3) angeordneten Vorratsbehälter (1) und einer unterhalb des Zwischengefässes (3) angeordneten Kokille (6), dadurch gekennzeichnet, dass zum Ermitteln der Höhe (22) des Metallschmelzenbadspiegels (23) in einander gegenüberliegenden Seitenwänden (34, 36) des Zwischengefässes (3) als Induktionsschleifen (35, 37), von denen eine (35) als Geber und mindestens eine (37) als Empfänger wirkt, vorgesehen sind (Fig. 3, 4).

5. Einrichtung zur Durchführung des Verfahrens nach Anspruch 1, mit einem über einem Zwischengefäss (3) angeordneten Vorratsbehälter (1) und einer unterhalb des Zwischengefässes (3) angeordneten Kokille (6), dadurch gekennzeichnet, dass zum Ermitteln der Höhe (24) des Schlackenbadspiegels (25) eine Infrarotkamera (33) vorgesehen ist (Fig. 3).

## Claims

1. Method of preventing slag (8) from penetrating into a continuous casting mould (6) during the continuous casting of a metal melt (2), the metal melt flowing from a reservoir (1) covered with a slag layer (7) on the surface into a tundish covered with a slag layer on the surface and from there into a mould (6), the height (22) of the metal-melt bath level (23) being continuously detected, characterised in that, in addition, the height (24) of the slag bath level is continuously detected in the tundish (3), and from the relation of the detected values the slag amount present in the tundish (3) is determined.

2. Arrangement for carrying out the method according to claim 1, comprising a reservoir (1) arranged above a tundish (3), and a mould (6) arranged below the tundish (3), a floating body (16) mounted on a carrying arm (12) and floating on the metal-melt bath level (23) being provided and the carrying arm (12) being connected with a measuring means (20) for measuring the position assumed by it, characterised in that a second floating body (18) also mounted on a carrying arm (13), but floating on the slag bath level (25) is provided, which is connected with a measuring means (21) for measuring the position assumed by it (Figs. 1, 2).

3. Arrangement according to claim 2, characterised in that one (13) of the two carrying arms (12, 13) is designed as a pivot arm extended beyond its pivot axis (14), and that the extension carries a, preferably displaceable, counterweight (19) (Figs 1, 2).

4. Arrangement for carrying out the method according to claim 1, comprising a reservoir (1) arranged above a tundish (3), and a mould (6) arranged below the tundish (3), characterised in that, for determining the height (22) of the metal-melt bath level (23) induction loops (35, 37) are provided in oppositely arranged side walls (34, 36) of the tundish (3), one (35) of which induction loops acts as a transmitter and at least one (37) of which acts as a receiver (Figs. 3, 4).

5. Arrangement for carrying out the method according to claim 1, comprising a reservoir (1) arranged above a tundish (3), and a mould (6) arranged below the tundish (3) characterised in that, for determining the height (24) of the slag level (25) an infrared camera (33) is provided (Fig. 3).

**Revendications**

1. Procédé pour empêcher la pénétration de scorie (8) dans une lingotière de coulée continue (6) lors de la coulée continue d'une masse de métal fondu (2), où la masse de métal fondu s'écoule d'un réservoir (1) couvert superficiellement d'une couche de scorie (7), dans un récipient intermédiaire couvert superficiellement d'une couche de scorie (8), et de celui-ci dans une lingotière (6), et où la hauteur (22) de la surface (23) du bain de métal fondu dans le récipient intermédiaire (3) est relevée de façon continue, caractérisé en ce que, dans le récipient intermédiaire (3) au surplus, la hauteur (24) de la surface (25) du bain de scorie est relevée de façon continue et en ce que, d'après la relation des valeurs relevées, la quantité de scorie qui se trouve dans le récipient intermédiaire (3) est déterminée.

2. Dispositif pour la mise en œuvre du procédé suivant la revendication 1, avec un réservoir (1) disposé au-dessus d'un récipient intermédiaire (3) et une lingotière (6) disposée en dessous du récipient intermédiaire (3) où un corps flottant (16) monté sur un bras porteur (12), flottant sur la surface (23) du bain de métal fondu, est prévu et où le bras porteur (12) est relié à un dispositif de mesure (20), pour mesurer la position prise par lui, caractérisé en ce qu'est prévu un deuxième corps flottant (18) également porté sur un bras porteur (13) mais flottant sur la surface (25) du bain de scorie, ce corps flottant étant relié à un dispositif de mesure (21), pour mesurer la position prise par lui (fig. 1, 2).

3. Dispositif suivant la revendication 2, caractérisé en ce que l'un (13) des deux bras porteurs (12, 13) est conformé en bras pivotant prolongé au-delà de son axe de pivotement (14) et en ce que le prolongement porte un contrepoids (19), de préférence déplaçable (fig. 1, 2).

4. Dispositif pour la mise en œuvre du procédé suivant la revendication 1, avec un réservoir (1) disposé au-dessus d'un récipient intermédiaire (3) et une lingotière (6) disposée en dessous du récipient intermédiaire (3), caractérisé en ce que pour le relevé de la hauteur (22) de la surface (23) du bain de métal fondu, des boucles d'induction (35, 37) sont prévues dans les parois latérales (34, 36), se faisant face, du récipient intermédiaire (3), boucles dont l'une (35) joue le rôle d'émetteur et dont l'une au moins (37) joue le rôle de récepteur (fig. 3, 4).

5. Dispositif pour la mise en œuvre du procédé suivant la revendication 1, avec un réservoir (1) disposé au-dessus d'un récipient intermédiaire (3) et une lingotière (6) disposée en dessous du récipient intermédiaire (3) , caractérisé en ce que pour le relevé de la hauteur (24) de la surface (25) du bain de scorie, une caméra à rayons infrarouges (33) est prévue (fig. 3).

FIG.1

## FIG.2

## FIG.3

## FIG.4